(19) Europäisches Patentamt
European Patent Office
Office européen des brevets

(11) Numéro de publication: **0 011 530**
**B1**

# (12) FASCICULE DE BREVET EUROPEEN

(45) Date de publication du fascicule de brevet: **09.12.81**

(51) Int. Cl.³: **G 01 N 27/56**, G 05 D 11/13

(21) Numéro de dépôt: **79400774.0**

(22) Date de dépôt: **19.10.79**

(54) **Capteur électrochimique des concentrations relatives d'espèces réactives dans un mélange de fluide, procédé de fabrication d'un tel capteur et système comportant un tel capteur, notamment pour la régulation.**

(30) Priorité: **21.11.78 FR 7832764**

(43) Date de publication de la demande: **28.05.80 Bulletin 80/11**

(45) Mention de la délivrance du brevet: **09.12.81 Bulletin 81/49**

(84) Etats contractants désignés: **DE GB SE**

(56) Documents cités:
**FR-A-2 051 855**
**US-A-3 597 345**

(73) Titulaire: **THOMSON-CSF, 173, Boulevard Haussmann, F-75360 Paris Cedex 08 (FR)**

(72) Inventeur: **Croset, Michel, "THOMSON-CSF" - SCPI 173, bld Haussmann, F-75360 Paris Cedex 08 (FR)**
Inventeur: **Velasco, Gonzalo, "THOMSON-CSF" - SCPI 173, bld Haussmann, F-75360 Paris Cedex 08 (FR)**

(74) Mandataire: **Lepercque, Jean et al, "THOMSON-CSF" - SCPI 173, Bld. Haussmann, F-75360 Paris Cedex 08 (FR)**

**EP 0 011 530 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Capteur électrochimique des concentrations relatives d'éspèces réactives dans un mélange de fluide, procédé de fabrication d'un tel capteur et système comportant un tel capteur, notamment pour la régulation.

L'invention se rapporte aux capteurs électrochimiques des concentrations relatives d'espèces réactives dans un mélange fluide et en particulier dans un gaz.

Une des familles bien connues de capteurs de pression partielle de gaz fonctionne sur le principe de la pile à concentration. Le mélange gazeux à analyser présent dans un compartiment 2 (figure 1), par un exemple un mélange oxygène-oxyde de carbone, est séparé d'un milieu de référence 1 par la paroi d'un électrolyte solide $E_1$ dont chaque face porte une électrode, respectivement $E_2$-$E_1$. Comme il est bien connu, les équations qui régissent ces capteurs sont:

- aux interfaces électrode/électrolyte:

$$O_2 \rightleftharpoons 2O \quad \underset{+4\ e^-}{\overset{-4\ e^-}{\rightleftharpoons}} \quad 2O^{-2} \qquad (1)$$

- la tension qui se développe alors entre les électrodes est donnée par la loi de NERNST:

$$\Delta v = \frac{RT}{4F} \; LN \; \frac{P_1}{P_2} \qquad (2)$$

avec R: constante des gaz parfaits = 8,314 J (mole. °K)

F: nombre de Faraday = 96490

T: température absolue en degrés Kelvin

$P_1$ et $P_2$: pressions partielles des milieux 1 et 2 dans les compartiments 1 et 2

- si le mélange dans le compartiment 2 est à l'équilibre, le rôle de l'électrode $E_2$ se limite à la réaction d'oxydo-réduction:

$$X_n - n\cdot\alpha\, e^- \rightleftharpoons n X^{\alpha-} \qquad (3)$$

- si l'électrode est en outre un catalyseur, il se produit la réaction:

$$2\,CO + O_2 \rightleftharpoons 2\,CO_2 \qquad (4)$$

et enfin si la combustion est complète, jusqu'à réaliser l'équilibre thermodynamique réversible, la relation suivante est vérifiée:

$$\frac{|CO| \; |O^2|^{1/2}}{|CO^2|} = K(T) \qquad (5)$$

avec K(T) un coefficient d'équilibre dépendant de la température, et $|CO|$, $|O^2|^{1/2}$, $|CO^2|$ les pressions partielles d'oxyde de carbone, d'oxygène et de gaz carbonique.

Pour obtenir une meilleure catalyse, des capteurs dans lesquels le fluide à analyser est d'abord catalysé avant d'atteindre la cellule de mesure sont en outre connus. Ces capteurs comportent deux zones distinctes: une première zone où est disposé un matériau catalyseur et une seconde zone où est disposée la cellule électrochimique proprement dite. De telles structures de capteurs sont décrites dans la demande de brevet FR-A-2 051 855 (Westinghouse Electric Corporation) et dans le brevet US-A-3 597 345 (W.M. Hickam et al).

L'invention concerne des capteurs de ce type, c'est-à-dire dont les électrodes ou d'autres moyens placés en amont de la cellule électrochimique de mesure sont catalyseurs, de telle sorte que le mélange gazeux à analyser atteigne l'équilibre thermodynamique au moins au niveau de l'interface électrode-électrolyte.

De tels capteurs sont utilisés couramment pour la régulation des moteurs à combustion et en particulier pour la régulation de l'admission du mélange air-carburant au niveau du carburateur. Le capteur est alors placé dans le circuit d'échappement et analyse la concentration relative des espèces oxygène-oxyde de carbone, contenues dans le gaz. Le capteur doit alors être adapté à certaines caractéristiques spécifiques à cette utilisation. En effet le gaz d'échappement va arriver par saccades, au rythme du mouvement alternatif des différents pistons. On résoud ces difficultés en prélevant des échantillons de gaz à analyser, qui seuls sont admis à l'intérieur du capteur où ils seront amenés à l'équilibre thermodynamique. On parle de «prises d'essai» qui si elles sont suffisamment rapprochées, tendent vers une analyse en continu, bien qu'en réalité le capteur fonctionne en régime dynamique. Pour arriver à ce résultat, on dispose habituellement en amont du capteur des moyens qui freinent sélectivement le gaz qui les traversent et qui limitent l'échange gazeux entre le milieux extérieur et l'intérieur du capteur. Par analogie aux lois qui régissent les circuits électriques, on appelera dans ce qui suit, ces moyens: «impédance de transfert». Diverses solutions ont été proposées qui reposent sur deux approches: selon la première approche le mélange gazeux à analyser pénètre dans le capteur par un ou plusieurs orifices calibrés; selon la seconde approche le mélange gazeux traverse un matériau solide poreux.

On a remarqué dans le passé que les données expérimentales, en particulier la mesure du rapport stoechiométrique d'un mélange gazeux, ne corroboraient pas toujours la valeur réelle. Outre que la catalyse n'est pas toujours complète dans certaines structures de catalyseurs, il est à noter que les impédances de transfert selon la seconde approche, telles que définies plus haut, ne sont pas neutres vis-à-vis des différentes espèces constituant le mélange.

En particulier, dans le cas d'un mélange de deux espèces, par exemple de l'oxygène et de l'oxyde de carbone, l'une des espèces peut diffuser plus rapidement que l'autre au sein du matériau poreux en question. En d'autres termes à une composition de mélange donnée à l'entrée du capteur, peut correspondre une composition de mélange différente au sein du matériau poreux et ensuite au niveau de l'électrode de mesure $E_2$.

L'invention va proposer une structure de capteurs, utilisant avec profit ce phénomène physique en intégrant dans le capteur une impédance de transfert prédéterminée, associée à des moyens de catalyse destinés à amener le mélange gazeux en équilibre thermodynamique avant analyse. Avec de tels capteurs, on mesure la concentration apparente des espèces d'un mélange gazeux, c'est-à-dire celle qui existe au niveau de l'électrode de mesure $E_2$.

L'invention a donc pour objet un capteur électrochimique des concentrations relatives d'espèces réactives contenues dans un mélange fluide comportant des premiers moyens comprenant un corps catalyseur, destinés à amener le mélange fluide à analyser à l'équilibre thermodynamique et des seconds moyens en cascade, comprenant une cellule électrochimique sensible à l'excès de l'une des espèces réactives par rapport à la stoechiométrie de la réaction, la cellule comprenant une première électrode en communication au milieu de référence, une seconde électrode en communication avec les premiers moyens et un électrolyte solide conducteur ionique de l'espèce à analyser, en contact avec ces deux électrodes; ladite cellule délivrant un signal électrique dont la courbe de variation en amplitude présente un basculement brusque à la stoechiométrie de la réaction; capteur principalement caractérisé en ce qu'il comporte des moyens supplémentaires constitués par un corps poreux inerte, traversé par le mélange fluide à analyser sur une longueur déterminée, lesdits moyens modifiant, dans des proportions préétablies, le rapport des concentrations relatives des espèces réactives contenues dans le mélange fluide à analyser de manière à décaler, dans les mêmes proportions préétablies, ledit basculement brusque de la courbe de variation en amplitude du signal électrique par rapport à la stoechiométrie du mélange fluide contenu dans ledit milieu à analyser.

L'invention a également pour objet le procédé de fabrication d'un tel capteur ainsi que le procédé de fabrication d'un capteur électrochimique des concentrations relatives d'espèces réactives d'un mélange fluide contenu dans un milieu à analyse du type comportant des premiers moyens comprenant un corps catalyseur, traversés par le mélange fluide à analyser sur une longueur déterminée et destinés à amener le mélange fluide à analyser à l'équilibre thermodynamique, et des seconds moyens en cascade, comprenant une cellule électrochimique sensible à l'excès de l'une des espèces réactives par rapport à la stoechiométrie de la réaction, la cellule comprenant une première électrode en communication au milieu de référence, une seconde électrode en communication avec les premiers moyens et un électrolyte solide conducteur ionique de l'espèce à analyser, en contact avec ces deux électrodes; ladite cellule délivrant un signal électrique dont la courbe de variation en amplitude présente un basculement brusque à la stoechiométrie de la réaction; procédé principalement caractérisé en ce qu'il comprend une étape pendant laquelle ladite longueur déterminée du corps catalyseur est ajustée de manière à ce que le corps catalyseur modifie en outre dans des proportions préétablies le rapport des concentrations relatives des espèces réactives le traversant et occasionne le décalage dans les mêmes proportions préétablies, dudit basculement brusque de la courbe de variation en amplitude du signal électrique par rapport à la stoechiométrie du mélange fluide contenu dans ledit milieu à analyser; la nature du matériau étant en outre déterminée de manière à obtenir ledit décalage au choix, de part ou d'autre de la stoechiométrie.

L'invention a encore pour objet l'application de capteurs fabriqués selon de tels procédés à la régulation de l'admission du mélange air-carburant dans les moteurs à combustion et à la régulation d'un mélange fluide de deux espèces hors de la stoechiométrie.

L'invention sera mieux comprise et d'autres caractéristiques apparaîtront à la lecture de la description ci-après en se référant aux dessins annexés parmi lesquels:

- la figure 1 illustre schématiquement le fonctionnement de la cellule de mesure utilisée dans les capteurs électrochimiques des concentrations relatives d'espèces réactives dans un mélange fluide;
- la figure 2 illustre un exemple de réalisation de capteur électrochimique selon une première approche;
- la figure 3 illustre un exemple de réalisation de capteur électrochimique selon une seconde approche;
- la figure 4 illustre un perfectionnement du capteur de la figure 2;
- la figure 5 illustre un perfectionnement du capteur de la figure 3 et dont la structure peut aussi être utilisée pour réaliser en une variante d'un capteur conforme à l'invention;
- la figure 6 illustre la structure théorique d'un capteur selon l'invention;
- les figures 7 et 8 sont des diagrammes explicatifs de deux modes de fonctionnement du capteur de la figure 6;
- la figure 9 est un jeu de courbes de réponses d'un capteur idéal, paramétrées en température;
- la figure 10 illustre une courbe de réponse d'un capteur conforme à l'invention;
- la figure 11 et 12 sont des capteurs réalisés conformément à l'invention;
- la figure 13 illustre les courbes de réponses de deux capteurs réalisés conformément à l'invention, selon la variante de la figure 5;
- les figures 14 et 15 illustrent deux modes d'application de capteurs selon l'invention à la régulation de l'admission du mélange air-carburant dans un moteur à combustion;
- la figure 16 illustre l'application de capteurs selon l'invention à la régulation de la production d'un mélange fluide de deux espèces dans un rapport voisin de la stoechiométrie.

La figure 1 illustre schématiquement le fonctionnement d'une cellule de mesure du type «pile à concentration». Cette cellule comporte un électrolyte solide $E_l$ et deux électrodes $E_1$ et $E_2$. Le gaz

compris dans le compartiment 1 a une pression partielle $P_1$ de référence. Ce peut être l'atmosphère dans le cas où le mélange gazeux à analyser est un mélange oxygène-oxyde de carbone. Pour cette application, les électrodes peuvent être en platine et l'électrolyte en zircone stabilisé à la chaux. Cet électrolyte est un conducteur ionique de l'oxygène. Les électrodes fournissent ou captent les électrons nécessaires aux réactions électrochimiques se produisant aux interfaces [1]. L'oxygène du mélange gazeux à analyser présent dans le compartiment 2, a une pression partielle $P_2$. A l'équilibre, qui correspond à l'égalisation du potentiel électrochimique de l'oxygène au sein des trois milieux, la tension $\Delta$ V développée aux bornes des électrodes est fournie par la loi de NERNST déjà citée [2] et détectée par tout circuit approprié de mesure.

Les figures 2 et 3 illustrent des exemples de capteurs réalisés respectivement selon la première et la seconde approche, c'est-à-dire comportant des impédances de transfert du type orifice calibré: $T_r$, sur la figure 2 ou du type matériau solide poreux: $S_p$, sur la figure 3. On retrouve dans ces deux cas, la cellule de mesure «$E_1$ - $E_I$ - $E_2$» de la figure 1. Le gaz G à analyser circule dans le milieu extérieur $M_{ex}$. Dans ces deux cas également la catalyse du mélange gazeux admis dans le capteur s'effectue au cours de la traversée, dans le sens de l'épaisseur, c'est-à-dire suivant la direction OZ de l'électrode $E_2$ réalisée en matériau catalyseur, par exemple du platine. Cette méthode n'est pas satisfaisante car on doit disposer d'une électrode d'épaisseur suffisante pour assurer la catalyse ce qui présente l'inconvénient, d'une part, d'augmenter le prix de l'électrode réalisée en métal précieux et d'autre part, de diminuer la réponse dynamique de la cellule. Aussi il a été proposé des structures perfectionnant les capteurs réalisés selon ces deux approches. Ce perfectionnement introduit des moyens catalyseurs dissociés de l'électrode de mesure. Le mélange gazeux à analyser traverse une enceinte en amont de la cellule de mesure, où est effectuée la catalyse. Ce catalyseur $C_t$ selon la première approche tapisse une enceinte sur une longueur 1c (zone 1) dans laquelle le gaz est admis par un orifice calibré $T_r$, comme illustré sur la figure 4 ou remplit cette enceinte, comme illustré sur la figure 5. Dans les deux cas il s'agit de couches de catalyseur de faible épaisseur, seule la surface de catalyseur en contact avec le gaz a de l'importance. Sur la figure 5, le matériau solide poreux ou non, de la zone 1 agit comme catalyseur $C_t$ et comme impédance de transfert $Z_t$. Le capteur de la figure 5 sera décrit en détail plus loin, car sa structure peut être utilisée dans une variante de capteurs réalisés conformément à l'invention.

Le fonctionnement d'un capteur électrochimique selon l'invention va maintenant être exposé en se référant aux figures 6 à 8. La figure 6 donne un modèle théorique d'un tel capteur. Ce capteur est supposé être de révolution autour d'un axe OX pour la commodité de l'explication. Ce capteur est divisé en trois zones: une zone 1: «Impédance de transfert $Z_t$» communiquant avec le milieu extérieur $M_{ex}$ contenant le gaz G à analyser, une zone 2 de catalyse $C_t$ et une zone 3 contenant une cellule électrochimique «$E_2$ - $E_I$ - $E_1$» de mesure. L'interface entre le milieu extérieur et la zone 1 a été symbolisé par l'indice 10; l'interface entre la zone 1 et la zone 2 et la zone 3, par l'indice 23. On suppose que l'interface 10 ne présente pas d'impédance de transfert du type «orifice calibré $T_r$» (comme sur les figures 2 et 4). La zone 1 contient un matériau solide dans lequel le gaz G doit diffuser pour arriver à l'interface 12 sous la forme G'. On suppose que le gaz G est formé d'oxyde de carbone et d'oxygène. Il est ensuite soumis à un processus de catalyse dans l'enceinte 2 où à chaque point d'abscisse $x_i$, il réagit sur le catalyseur $C_t$ pour donner la réaction $R_i$ selon l'équation [4] précitée. Le gaz G″ à la sortie de l'enceinte 2, est ensuite analysé par la cellule «$E_2$ - $E_I$ - $E_1$», aux bornes des électrodes $C_1$, $C_2$ de laquelle se développe une différence de potentiel $\leftrightharpoons$ conformément à la loi de NERNST [2]. Cette différence de potentiel n'est pas directement représentative des concentrations $c_1/c_2$, respectivement d'oxyde de carbone CO et d'oxygène $O_2$ à l'interface 10, mais de $c_1''$ et $c_2''$ à l'interface 23 (c'est-à-dire du milieu $P_2$). Le milieu $P_1$ est un milieu de référence qui peut être par exemple l'air ambiant AAb.

Pour expliquer le processus de transfert entre les interfaces 10 et 23, deux cas doivent être considérés:

– On suppose tout d'abord que l'impédance de transfert soit faible (c'est-à-dire que la diffusion soit rapide) et que le processus de catalyse soit insuffisant ou lent. La catalyse se traduit par une consommation du type $CO+\frac{1}{2}O_2 \rightleftharpoons CO_2$, selon la réaction énoncée (1). La diffusion étant rapide, les deux espèces (CO et $O_2$) sont fournies à tout instant à l'enceinte 2, en quantité suffisante pour qu'il n'y ait pas de différence notable de composition entre G et G″. Il en résulte que les concentrations $c_1'$ et $c_2'$ restent pratiquement inchangées par rapport à $c_1$ et $c_2$ sur l'interface 10. Ce cas est illustré sur la figure 7. Sur l'axe ox sont représentés en $x_1$ et $x_2$, les interfaces 10 et 12 et en ordonnée les concentrations $c_1$, $c_2$ et $c_1'$ et $c_2'$. La zone hachurée $Ct_1$ symbolise l'enceinte catalytique 2.

– On suppose maintenant que la vitesse de catalyse (c'est-à-dire la consommation des deux espèces selon l'équation [2]) soit grande vis-à-vis de la vitesse de renouvellement d'au moins une des espèces (c'est-à-dire son courant de diffusion) du fait d'une impédance de transfert $Z_t$ forte par rapport à cette espèce. Dans ce cas, illustré sur la figure 8, les concentrations absolues et relatives en oxyde de carbone et en oxygène du mélange G' à l'interface 12 (et également G″ à l'interface 23) sont différentes de ceux du mélange G à l'interface 10.

Le courant de diffusion $J_i$ d'une espèce i est donné par la loi de FICK:

$$J_i = - D_i \frac{\partial c}{\partial x} \qquad (6)$$

où $D_i$ est la constance de diffusion dans le milieu constituant l'impédance $Z_t$;
x est un point déterminé de OX;
c est la concentration en ce point déterminé de Ox.

Si $D_1$ est la constante de diffusion de l'oxyde de carbone et $D_2$ celle de l'oxygène, en tous points x de l'axe Ox dans la zone 1, et en particulier à l'interface 12, le rapport des concentrations: $c_1/c_2$ ne dépend que du rapport: $D_1/D_2$ et de la distance parcourue selon l'axe OX. Ce rapport, dans le cas de la diffusion gazeuse, est lui même régi par la relation:

$$\frac{D_1}{D_2} = K(T)\sqrt{\frac{M_1}{M_2}} \qquad (7)$$

où $M_1$ et $M_2$ sont les masses moléculaires des espèces 1 et 2 et K(T) un coefficient dépendant de la température.

Pour deux espèces données d'un mélange gazeux le rapport des concentrations $c_1/c_2$ ne peut donc évoluer que dans un seul sens.

On va maintenant se reporter à la figure 9 qui représente une famille de courbes de réponse d'un capteur idéal, c'est-à-dire sans impédance de transfert. Un capteur tel que décrit sur la figure 4 a une courbe de réponse qui diffère peu de la courbe de réponse théorique. Ceci est dû au fait que l'impédance de transfert Tr est pratiquement neutre vis-à-vis des différentes espèces du mélange de gaz G à analyser, ce qui fait que les concentrations relatives n'en sont pas affectées. L'abscisse λ représente le rapport des concentrations des gaz réactifs, à l'entrée du capteur, normé à la concentration stoechiométrique $\lambda_s$. Dans le cas du mélange CO + $O_2$ on a:

$$\lambda = \frac{\left[\frac{[O_2]}{[CO]}\right] \text{ rapport réel}}{\left[\frac{[O_2]}{[CO]}\right] \text{ rapport stoéchiométrique}}$$

Dans la région II, les courbes sont pratiquement confondues, ce qui n'est pas le cas dans les régions I et III. Ceci est dû à l'effet de la température, ce de par les équations [2] et [5]. On a représenté trois courbes: pour $T_1$ = 500°C, $T_2$ = 800°C et $T_3$ = 1100°C.

La figure 10 représente la courbe de réponse d'un capteur selon l'invention (à une température donée $T_1$ = 500°C). On voit que le point d'abscisse $\lambda_i$ est décalé par rapport au point d'abscisse $\lambda_s$. On vient de monter, en relation avec les figures 6 et 8 que le mélange G″ est différent de celui G que l'on trouve à l'entrée du capteur, c'est-à-dire du mélange à analyser qui circule dans le milieu extérieur Mex. Le point $\lambda_i$ est donc représentatif du rapport stoechiométrique apparent du gaz à analyser. On voit immédiatement qu'en réalisant, au stade de la fabrication, une impédance prédéterminée, par exemple en ajustant la longueur de la zone 1, on peut s'arranger pour que le basculement de la courbe correspondante à une composition donnée de mélange à l'entrée du capteur. En effet, si $\lambda_i$ correspond au rapport stoechiométrique mesuré, au niveau de l'électrode $E_2$ (milieu $P_2$), on peut prévoir, soit à l'aide du calcul des paramètres de diffusion, soit par l'expérimentation, quelle sera la composition du mélange G à l'entrée du capteur lorsqu'on détecte des concentrations relatives correspondant à la stoechiométrie du mélange au niveau de la cellule électrochimique (milieu $P_2$).

La figure 11 est un exemple de réalisation d'un capteur électrochimique conforme à l'invention. On retrouve la structure générale de la figure 4, à l'exception de la zone 1 de la figure qui est remplie de matériau poreux formant l'impédance $Z_t$, sur une longueur $1_c$ la zone 2 tapisée de catalyseur $C_t$ et la zone 3 contenant la cellule électrochimique de mesure «$E_2$ - $E_I$ - $E_1$». La différence de potentiel △V est recueillie aux bornes des électrodes $E_1$, $E_2$ via les connexions $C_1$, $C_2$. On obtient pour un tel capteur une courbe de réponse du type de cellule illustrée par la figure 10. En agissant sur $1_i$ on peut «régler» le point $\lambda_i$ qui sera détecté ultérieurement, à l'aide d'une logique à seuil par exemple.

L'impédance de transfert $Z_t$ peut être à base de zircone, d'alumine ou de tout autre ciment réfractaire. Des valeurs typiques de $l_i$ vont de quelques microns à quelques centaines de microns, selon la porosité. Un décalage dans le sens croissant de $\lambda_i$ de l'ordre de 15% par rapport à $\lambda_s$ est facilement réalisable en utilisant de l'alumine comme impédance de transfert, dans le cas où le capteur utilisé analyse la composition d'un mélange oxyde de carbone-oxygène. La structure d'un capteur selon l'invention n'est pas limitée à celle représentée sur la figure 11. On peut transformer de la même manière d'autres structures de capteurs de l'art antérieur en y insérant une impédance $Z_t$ constituée par un matériau poreux approprié.

La figure 12 est une variante d'un capteur réalisé sur le modèle de celui dela figure 11 précédemment décrite. Il en diffère par le fait que le catalyseur $C_t$ et l'impédance de transfert $Z_t$ sont réalisées au sein d'un même matériau poreux, possédant intrinséquement des propriétés de catalyse ou bien chargé d'un catalyseur. On verra dans ce qui suit que ce capteur a un fonctionnement analogue à ce qui vient d'être exposé. La structure de capteur de la figure 5 est également une variante de ce type.

Il est cependant à noter que, pour une composition de gaz donnée, par exemple oxygène-oxyde de carbone, on ne peut faire varier le rapport $c_1/c_2$ que dans un sens, en accord avec les formules (6) et (7). Il sera exposé plus loin, d'autres structures de capteurs qui permettent de s'affranchir de cette limitation.

Les capteurs de la figure 12 et également de la figure 5 précédemment mentionnée ont la particularité de confondre intimement, d'une part, un catalyseur $C_t$ et, d'autre part, une impédance $Z_t$. On peut appeler ce processus: diffusion avec réaction catalytique. En effet la zone 1 joue ces deux rôles. Il va falloir à ce stade distinguer deux

cas:

- On suppose tout d'abord que le matériau remplissant la zone 2 est un corps poreux chargé de catalyseur comme sur la figure 12. On reste dans un mode de diffusion gazeux. Les lois [6] et [7] exposées précédemment restent valables. Pour avoir un effet significatif, la consommation par catalyse en tous points de $l_i$ des espèces du mélange doit être plus rapide que l'apport de ces espèces par courant de diffusion.

- Un autre cas à étudier est le comportement du capteur si le matériau est un corps solide perméable et catalyseur. C'est le cas du capteur de la figure 5. On se trouve alors beaucoup plus complexe. La diffusion en chaque point dépend essentiellement de la réactivité entre une espèce donnée et le matériau solide. Pour un mélange fluide, l'expérience montre que certains corps catalyseurs font évoluer le rapport $c_1/c_2$ dans un sens et d'autres corps catalyseurs dans le sens opposé.

A titre d'exemple non limitatif, pour le mélange oxygène-oxyde de carbone, le diagramme de la figure 13 donne des courbes de réponse de deux capteurs dont les corps catalyseurs sont choisis de telle façon que le point de stoechiométrie apparente $\lambda_i$ est «avancé» pour le premier capteur (courbe A) et «retardé» pour le second (courbe B).

La structure de la figure 5 convient donc pour réaliser un capteur conforme à l'invention. Il suffit d'ajuster en fabrication la longueur $l_c$ et de chosir un matériau approprié pour constituer la zone 1. L'électrode $E_2$ peut être constituée par le même matériau. Les matériaux $S_1$ et $S_2$ sont les matériaux isolants électriques et étanches. On retrouve également les autres constituants déjà mentionnés du capteur: $E_2$, $E_l$, $E_1$, $P_1$.

Ce capteur présente d'avantage de souplesse quant au réglage de ce qu'on a appelé le rapport stoechiométrique apparent $\lambda_i$, puisqu'il est possible de faire évoluer le rapport $c_1/c_2$ du mélange G dans les sens croissants ou décroissants.

Il est particulièrement intéressant d'appliquer les capteurs de l'invention à la régulation de l'admission du mélange air-carburant dans un moteur à combustion.

La figure 14 est un schéma de principe de la régulation du mélange air-carburant d'un moteur à combustion 1. Le moteur 1 comporte une admission d'air A et de carburant E, qui sont mélangés dans un organe 5. Celui-ci peut être un carburateur à cuve, un dispositif d'injection ou tout autre dispositif analogue. Le mélange est amené au moteur 1 par le conduit A/E.

L'organe 5 est sous le contrôle d'un organe régulateur 4. La liaison 12 est par un exemple un axe d'accouplement mécanique. Les gaz brulés sont ensuite éjectés dans l'atmosphère AAb par un circuit d'échappement $E_c$. Sur le trajet est disposé un capteur 2 conforme à l'invention qui communique avec le gaz d'échappement par le conduit symbolisé G. En réalité le capteur est inséré dans le tuyau d'échappement et maintenu par toutes fixations appropriées. Le signal développé entre les électrodes $E_2$, $E_1$ de la cellule électrochimique de mesure est transmis à un dispositif de commande par les liaisons électriques 10. Le dispositif de commande doit posséder une forte impédance d'entrée de façon à limiter le courant traversant la cellule électrochimique de mesure. Il doit être capable de détecter, par exemple à l'aide d'une logique à seuil, le basculement de la courbe ⇆ V autour de $\lambda_s$ (figure 10) ou $\lambda_s$ ou $\lambda_A$ oω $\lambda_B$ (figure 13), et sa sortie commande l'organe de régulation 4 par la liaison 11. Le milieu de référence $P_1$ de la cellule de mesure est dans le cas présent l'air ambiant AAb.

Ce procédé de régulation ne diffère de l'art antérieur que par l'utilisation d'un capteur selon l'invention qui permet de détecter, non plus une valeur fixe et unique ($\lambda_s$ ou une valeur très approchée) mais une valeur décalée de façon préétablie, au stade de la fabrication, par un choix judicieux de l'impédance de transfert $Z_t$ inclus dans le capteur. Cette valeur détectée permet d'établir un régime de moteur optimisé, pour répondre, par exemple, à des normes antipollution ou pour obtenir un meilleur rendement.

La figure 15 est un perfectionnement au procédé de régulation qui vient d'être décrit. Le comportement d'un moteur à combustion à froid, au moment du démarrage, est en effet très différent du comportement à chaud, après un temps de fonctionnement variable qui dépend des caractéristiques propres du moteur. Il est donc particulièrement avantageux de disposer de plusieurs points de référence qui définissent plusieurs régimes de régulation du rapport air-carburant. Sur la figure 15 on a représenté, outre les organes communs de la figure 14, deux capteurs 21 et 22 munis d'impédances de transfert différentes. Celles-ci peuvent être choisis parmi une gamme standardisée d'impédances. Ce serait le cas pour du matériel dit «grand public», destiné à l'industrie automobile. On peut aussi, pour des applications destinées à du matériel professionnel, ajuster individuellement l'impédance de transfert $Z_t$. Un commutateur K, déclenché par un organe de commande $C_d$ aiguille soit les signaux de sortie 101 du capteur 21, soit les signaux de sortie 102 du capteur 22 vers l'organe 3, décrit en référence avec la figure 14. L'organe de commande $C_e$ peut être actionné manuellement ou automatiquement: sur la figure 15, un signal S provenant d'une sonde, par exemple une sonde de température, entraine le basculement du commutateur K de 101 à 102, par l'intermédiaire de l'organe de commande $C_d$. On peut utiliser un amplificateur suivi d'un relai à contact K. Il est très facile à l'homme de l'art de trouver d'autres solutions satisfaisantes. A titre d'exemple non limitatif, on peut utiliser deux capteurs présentant respectivement les courbes de réponse A et B de la figure 13. Les deux points détectés sont donc $\lambda_A$ et $\lambda_B$ qui correspondent à deux mélanges gazeux de composition différente dans le conduit d'échappement et par l'effet de la rétroaction, à deux rapports air-carburant du mélange admis dans le moteur 1.

Bien qu'en relation avec la figure 15, il ait été décrit une régulation utilisant deux capteurs, ce nombre peut être augmenté à volonté sans sortir du cadre de l'invention. D'autre part, le domaine d'application des capteurs électrochimiques de l'invention n'est pas limitée à la régulation de l'admission du mélange air-carburant dans un moteur à combustion.

Les capteurs selon l'invention peuvent être également appliqués à la régulation de la production d'un mélange fluide à la stoechiométrie du mélange (si le capteur détecte $\lambda_s$) ou autour de cette valeur, dans une proportion prédéterminée (si le capteur détecte $\lambda_s \pm x\%$, avec x dépendant de l'impédance de transfert $Z_t$ du capteur).

La figure 16 illustre schématiquement une telle application. Deux espèces gazeuses, en l'occurrence de l'oxygène et de l'oxyde de carbone, doivent être mélangées dans un rapport stoechiométrique ($\lambda_s$) ou dans un rapport ($\lambda_i$) qui en diffère d'une valeur prédéterminée (x; avec $\lambda_i = \lambda_s \pm x\%$). Ces deux espèces sont amenées par des conduits séparés CO et $O_2$ pour être mélangées et fournies à une unité utilisatrice (non représentée) par la conduite U. Un capteur C conforme à l'invention analyse le mélange circulant dans la conduite U via l'orifice d'échange gazeux G tel qu'il a été défini précédemment. Le signal de sortie $S_1$ du capteur C, détectant le basculement de la courbe de réponse en tension autour de $\lambda_s$ ou plus généralement de $\lambda_i$, est transmis à un circuit de mise en forme 1 qui peut être constitué par un amplificateur et un circuit logique de détection de seuil. La sortie de ce circuit commande un régulateur 2, agissant sur une vanne V insérée dans la conduite $O_2$. La liaison 1 est par exemple un axe d'accouplement mécanique. La vanne V régule donc le débit d'oxygène, de façon à fournir à une unité utilisatrice, un mélange gazeux de concentration relative de deux espèces prédéterminée. Le choix d'une impédance de transfert de nature et de valeur donnée, définit entièrement la composition du mélange fluide circulant dans le conduit U. Le mélange s'effectue en M.

Comme dans le cas de la figure 15, plusieurs capteurs d'impédances de transfert différentes peuvent être utilisées définissant chacun un $x_i\%$ différent.

D'autres mélanges fluides peuvent être régulés de la même façon: à titre d'exemple non limitatif, on peut citer la régulation de carburant pour fusée (mélange oxygène-hydrogène) ou du gaz à l'eau (mélange oxyde de carbone-eau).

**Revendications**

1. Capteur électrochimique des concentrations relatives d'espèces réactives d'un mélange fluide (G) contenu dans un milieu à analyser ($M_{ex}$) comportant des premiers moyens comprenant un corps catalyseur ($C_t$), destinés à amener le mélange fluide à analyser à l'équilibre thermodynamique et des seconds moyens en cascade comprenant une cellule électrochimique sensible à l'excès de l'une des espèces réactives par rapport à la stoechiométrie de la réaction, la cellule comprenant une première électrode ($E_1$) en communication avec le milieu de référence ($P_1$), une seconde électrode ($E_2$) en communication avec les premiers moyens et un électrolyte solide ($E_l$) conducteur ionique de l'espèce à analyser, en contact avec ces deux électrodes ($E_1$, $E_2$); ladite cellule délivrant un signal électrique dont la courbe de variation en amplitude présente un basculement brusque à la stoechiométrie de la réaction; capteur caractérisé en ce qu'il comporte des moyens supplémentaires ($Z_t$) constitués par un corps poreux inerte, traversé par le mélange fluide (G) à analyser sur une longueur déterminée ($l_i$), lesdits moyens modifiant, dans des proportions préétablies, le rapport des concentrations relatives des espèces réactives contenues dans le mélange fluide à analyser de manière à déclarer, dans les mêmes proportions préétablies, ledit basculement brusque ($\lambda_i$) de la courbe de variation en amplitude du signal électrique par rapport à la stoechiométrie ($\lambda_s$) du mélange fluide contenu dans ledit milieu à analyser ($M_{ex}$).

2. Capteur selon la revendication 1, caractérisé en ce que le corps poreux inerte, constituant lesdits moyens supplémentaires ($Z_t$) est de la zircone, de l'alumine ou un ciment réfractaire.

3. Procédé de fabrication d'un capteur selon la revendication 2 caractérisé en ce qu'il comprend une étape pendant laquelle la longueur déterminée ($l_i$) est ajustée de manière à obtenir ledit décalage dans lesdites proportions préétablies.

4. Procédé de fabrication d'un capteur électrochimique des concentrations relatives d'espèces réactives d'un mélange fluide (G) contenu dans un milieu à analyse ($M_{ex}$) du type comportant des premiers moyens comprenant un corps catalyseur ($C_t$), traversés par le mélange fluide à analyser sur une longueur déterminée ($l_c$) et destinés à amener le mélange fluide à analyser à l'équilibre thermodynamique, et des seconds moyens en cascade, comprenant une cellule électrochimique sensible à l'excès de l'une des espèces réactives par rapport à la stoechiométrie de la réaction, la cellule comprenant une première électrode ($E_1$) en communication au milieu de référence ($P_1$), une seconde électrode ($E_2$) en communication avec les premiers moyens et un électrolyte solide ($E_l$) conducteur ionique de l'espèce à analyser, en contact avec ces deux électrodes ($E_1$, $E_2$); ladite cellule délivrant un signal électrique dont la courbe de variation en amplitude présente un basculement brusque à la stoechiométrie de la réaction; procédé caractérisé en ce qu'il comprend une étape pendant laquelle ladite longueur déterminée ($l_c$) du corps catalyseur est ajustée en outre dans des proportions préétablies le rapport des concentrations relatives des espèces réactives le traversant et occasionne le décalage, dans les mêmes proportions préétablies, dudit basculement brusque ($\lambda_i$) de la courbe de variation en amplitude du signal électrique par rapport à la stoechiométrie ($\lambda_s$) du mélange fluide contenu dans ledit milieu à analyser ($M_{ex}$); la nature du matériau étant en outre déterminée de manière à

obtenir ledit décalage, au choix, de part ou d'autre de la stoechiométrie ($\lambda_s$).

5. Procédé de fabrication selon la revendication 4 caractérisé en ce que le corps catalyseur ($C_t$) est à base de platine, de texture compacte ou poreuse, ou à base d'un corps poreux inerte chargé de platine ou d'oxydes métalliques, les métaux étant choisis parmi les suivants: titanium, vanadium, plomb, argent, nickel, cobalt, cuivre, manganèse, fer, cerium ou zinc.

6. Système de régulation du mélange air-carburant (A/E) d'un moteur à combustion interne (1) par analyse électrochimique des gaz d'échappement comprenant des moyens pour effectuer ladite analyse placés dans une boucle de rétroaction comportant un dispositif de commande (3, 4) recevant les signaux de sortie du capteur (2) pour la commande d'un régulateur (5) de richesse air-carburant (A/E), caractérisé en ce que les moyens pour effectuer ladite analyse comportent au moins un capteur fabriqué selon le procédé de l'une quelconque des revendications 3 à 5 de manière à entraîner une variation, dans des proportions préétablies, en amplitude et en signe, du rapport des concentrations relatives des espèces réactives présentes dans le gaz d'échappement avant analyse (G) et à ce que la régulation du mélange air-carburant (A/E) puisse être ajustée dans les mêmes proportions préétablies que la variation du rapport des concentrations relatives des espèces réactives.

7. Système de régulation du mélange air-carburant (A/E) d'un moteur à combustion interne (1) par analyse électrochimique des gaz d'échappement (G) selon la revendication 6, caractérisé en ce que lesdits moyens d'analyse comportent plusieurs capteurs (21-22) ajustés différemment de manière à définir autant de points différents de régulation du mélange air-carburant (A/E).

8. Système de régulation du rapport des concentrations relatives d'un mélange fluide, différent du rapport stoechiométrique dans une proportion prédéterminée; comportant pour chaque espèce un conduit séparé (CO, $O_2$) d'admission à un mélangeur (M); système de régulation caractérisé en ce qu'il comporte une boucle de rétroaction comprenant au moins un capteur (C) fabriqué selon l'une quelconque des revendications 3 à 6, disposé à la sortie d'un mélangeur (M) et un dispositif de commande (1, 2) recevant les signaux de sortie du capteur pour la commande d'une vanne régulatrice (V) insérée dans le conduit d'admission de l'espèce ($O_2$) à laquelle la cellule électrochimique dudit capteur (C) est sensible.

9. Système de régulation selon la revendication 8 caractérisé en ce qu'il comporte plusieurs capteurs ajustés différemment de manière à définir autant de rapports des concentrations relatives différents entre eux et différents du rapport stoéchiométrique.

**Claims**

1. Electrochemical probe for sensing the relative concentrations of reaction components of a fluid mixture (G) contained in an environment ($M_{ex}$) to be analyzed, comprising first means including a catalyzer body ($C_t$) and intended to bring the fluid mixture to be analyzed to the thermodynamic balance, and second means arranged in cascade and comprising an electrochemical cell sensitive to an excess of one of the reaction components with respect to the stoichiometric relation of the reaction, the cell comprising a first electrode ($E_1$) in communication with the reference environment ($P_1$), a second electrode ($E_2$) in communication with the first means and a solid electrolyte ($E_l$) being an ionic conductor of the component to be analyzed and in contact with these two electrodes ($E_1$, $E_2$); said cell providing an electric signal the amplitude variation curve of which has a sudden reversion at the stoichiometry of the reaction; the probe being characterized in that it comprises supplementary means ($Z_t$) formed by an inert porous body crossed by the fluid mixture (G) to be analyzed over a determined length ($l_i$), said means modifying within predetermined proportions the ratio of the relative concentrations of the reaction components contained within the fluid mixture to be analyzed, in a manner to shift said sudden reversion ($\lambda_i$) of the amplitude variation curve of the electric signal in the same predetermined proportions with respect to the stoichiometry ($\lambda_s$) of the fluid mixture contained within the said environment ($M_{ex}$) to be analyzed.

2. Probe in accordance with claim 1, characterized in that the inert porous body forming said supplementary means ($Z_t$) is of zirconia, alumina or refractory cement.

3. Method of producing a probe in accordance with claim 2, characterized in that it comprises a step during which the predetermined length ($l_1$) is adjusted to obtain said shift within the predetermined proportions.

4. Method of producing an electronic probe for sensing the relative concentrations of the reaction components of a fluid mixture (G) contained within an environment ($M_{ex}$) to be analyzed, of the type comprising first means including a catalyzer body ($C_t$), crossed by the fluid mixture to be analyzed over a predetermined length ($l_c$) and intended to bring the fluid mixture to be analyzed to the thermodynamic balance, and second means in cascade comprising and electrochemical cell sensitive to an excess of one of the reaction components with respect to the stoichiometry of the reaction, the cell comprising a first electrode ($E_1$) in communication with the reference environment ($P_1$), a second electrode ($E_2$) in communication with the first means, and a solid electrolyte ($E_1$) being an ionic conductor of the component to be analyzed and in contact with these two electrodes ($E_1$, $E_2$); said cell providing an electric signal the amplitude variation curve of which has a sudden reversion at the stoichiometry of the reaction; the method being characterized in that it comprises a step during which said determined length ($l_c$) of the catalyzer body is adjusted so that the catalyzer body ($C_t$) further modifies, within the predetermined proportions, the ratio of the relative concentrations of the reaction components crossing the same and causes the shift, within the same predetermined proportions, of the sudden reversion ($\lambda_i$) of the amplitude variation curve of the electric signal with respect to the stoichiometry ($\lambda_s$) of the fluid mixture contained within said environment ($M_{ex}$) to be analyzed; the nature of the material being further determined to obtain said shift selectively on one or the other side of stoichiometry ($\lambda_s$).

5. The production method of claim 4, characterized in that the catalyzer body ($C_t$) is platinum-based and of compact or porous texture or based on a porous inert body charged with platinum or metallic oxides, the metals being selected within the following: titanium, vanadium, lead, silver, nickel, cobalt, chromium, copper, manganese, iron, cerium or zinc.

6. System for regulating the air-fuel (A/E) mixture of an engine (1) with internal combustion by electrochemical analysis of the exhaust gas, comprising means for performing said analysis placed within a feedback loop comprising a control device (3, 4) receiving the output signals of the probe (2) for controlling a regulator (5) of the air-fuel (A/E) ratio, characterized in that the means for performing said analysis comprise at least one probe produced in accordance with the method of any of claims 3 to 5 in a manner to cause an amplitude and sign variation, within predetermined proportions, of the ratio of the relative concentrations of the reaction components within the exhaust gas (G) prior to the analysis and to permit the regulation of the air-fuel (A/E) mixture to be adjusted within the same predetermined proportions as the variation of the ratio of the relative concentrations of the reaction components.

7. System for regulating the air-fuel (A/E) mixture of an engine (1) with internal combustion by electrochemical analysis of the exhaust gas (G) in accordance with claim 6, characterized in that said analysis means comprise a plurality of probes (21-22) of different adjustments in a manner to define as many different regulation points of the air-fuel (A/E) mixture.

8. System for regulating the ratio of the relative concentrations of a fluid mixture which is different from the stoichiometric ratio within a predetermined proportion; comprising one separate supply conduct (CO, $O_2$) for each component leading towards a mixer (M); the regulating system being characterized in that it comprises a feedback loop comprising at least one probe (C) produced in accordance with any of claims 3 to 6 and placed at the output of a mixer (M), and a control device (1, 2) receiving the output signals of the probe for controlling a regulator valve (V) inserted into the supply conduct of the component ($O_2$) to which the electrochemical cell of said probe (C) is sensitive.

9. Regulating system in accordance with claim 8, characterized in that it comprises a plurality of probes of different adjustments in a manner to define as many ratios of the relative concentrations different from each other and from the stoichiometric ratio.

**Patentansprüche**

1. Elektrochemischer Fühler für die relativen Konzentrationen von Reaktionskomponenten eines Fluidgemisches (G), das in einem zu analysierenden Milieu ($M_{ex}$) enthalten ist, mit ersten Mitteln, die einen Katalysatorkörper ($C_t$) umfassen und dazu bestimmt sind, das zu analysierende Fluidgemisch in den Zustand des thermodynamischen Gleichgewichts zu bringen, und mit zweiten, in Kaskade angeordneten Mitteln, die eine elektrochemische Zelle umfassen, welche auf den Überschuss einer der Reaktionskomponenten in bezug auf die Stöchiometrie der Reaktion anspricht, wobei die Zelle eine erste Elektrode ($E_1$), die in Verbindung mit dem Referenzmilieu ($P_1$) ist, eine zweite Elektrode ($E_2$), die in Verbindung mit den ersten Mitteln ist, und einen Feststoffelektrolyt ($E_l$) umfasst, der für die Ionen der zu analysierenden Komponente leitfähig und mit diesen beiden Elektroden ($E_1$, $E_2$) in Berührung ist; wobei die genannte Zelle ein elektrisches Signal abgibt, dessen Amplitudenvariationskurve im stöchiometrischen Zustand der Reaktion ein plötzliches Umschlagen aufweist; wobei der Fühler dadurch gekennzeichnet ist, dass er zusätzliche Mittel ($Z_t$) umfasst, die durch einen porösen inerten Körper gebildet sind, der von dem zu analysierenden Fluidgemisch (G) auf einer vorbestimmten Länge ($l_i$) durchquert wird, wobei die genannten Mittel in vorbestimmten Proportionen das Verhältnis der Relativkonzentrationen der in dem zu analysierenden Fluidgemisch enthaltenen Reaktionskomponenten derart verändert, dass in denselben vorbestimmten Proportionen das plötzliche Umschlagen ($\lambda_i$) der Amplitudenvariationskurve des elektrischen Signals in bezug auf den stöchiometrischen Zustand ($\lambda_s$) des in dem zu analysierenden Milieu ($M_{ex}$) enthaltenen Fluidgemisches verschoben wird.

2. Fühler nach Anspruch 1, dadurch gekennzeichnet, dass der inerte poröse Körper, der die weiteren Mittel ($Z_t$) bildet, aus Zirkonoxid, Aluminiumoxid oder einem feuerfesten Zement ist.

3. Verfahren zur Herstellung eines Fühlers nach Anspruch 2, dadurch gekennzeichnet, dass es einen Schritt umfasst, bei dem die vorbestimmte Länge ($l_i$) so eingestellt wird, dass die genannte Verschiebung in den vorbestimmten Proportionen erhalten wird.

4. Verfahren zur Herstellung eines elektrochemischen Fühlers für die Relativkonzentrationen von Reaktionskomponenten eines in einem zu analysierenden Milieu ($M_{ex}$) enthaltenen Fluidgemisches (G), des Typs, welcher erste Mittel, die einen Katalysatorkörper ($C_t$) enthalten, von dem zu analysierenden Fluidgemisch auf einer vorbestimmten Länge ($l_c$) durchquert werden und dazu bestimmt sind, das zu analysierende Fluidgemisch in den Zustand des thermodynamischen Gleichgewichts zu bringen, und zweite, in Kaskade angeordnete Mittel umfasst, welche eine elektrochemische Zelle enthalten, die anspricht auf den Überschuss der einen Reaktionskomponente in bezug auf den stöchiometrischen Zustand der Reaktion, wobei die Zelle eine erste Elektrode ($E_1$), die mit dem Referenzmilieu ($P_1$) in Verbindung ist, eine zweite Elektrode ($E_2$), die in Verbindung mit den ersten Mitteln ist, und einen Feststoffelektrolyt ($E_l$) umfasst, der für die Ionen der zu untersuchenden Komponente leitfähig ist und mit diesen beiden Elektroden ($E_1$, $E_2$) in Berührung ist; wobei die genannte Zelle ein elektrisches Signal abgibt, dessen Amplitudenvariationskurve im stöchiometrischen Zustand der Reaktion ein plötzliches Umschlagen zeigt; wobei das Verfahren dadurch gekennzeichnet ist, dass es einen Schritt umfasst, bei welchem die vorbestimmte Länge ($l_c$) des Katalysatorkörpers so eingestellt wird, dass der Katalysatorkörper ($C_t$) ferner in vorbestimmten Proportionen das Verhältnis der Relativkonzentrationen der ihn durchquerenden Reaktionskomponenten verändert und die in denselben vorbestimmten Proportionen erfolgende Verschiebung des plötzlichen Umschlagens ($\lambda_i$) der Amplitudenvariationskurve des elektrischen Signals in bezug auf den stöchiometrischen Zustand ($\lambda_s$) des in dem zu analysierenden Milieu ($M_{ex}$) enthaltenen Fluidgemisches hervorruft; wobei ferner die Art des Materials so bestimmt ist, dass die Verschiebung wahlweise auf der einen oder anderen Seite des stöchiometrischen Zustandes ($\lambda_s$) erhalten wird.

5. Herstellungsverfahren nach Anspruch 4, dadurch gekennzeichnet, dass der Katalysatorkörper ($C_t$) auf Platinbasis und mit kompakter oder poröser Struktur oder auf der Basis eines inerten porösen Körpers, der mit Platin oder Metalloxiden angereichert ist, ausgebildet ist, wobei die Metalle unter den folgenden ausgewählt sind: Titan, Vanadium, Blei, Silber, Nickel, Kobalt, Chrom, Kupfer, Eisen, Cerium oder Zink.

6. System zur Regulierung des Luft-Brennstoff-Gemisches (A/E) eines Motors (1) mit interner Verbrennung durch elektrochemische Analyse der Auspuffgase, mit in einer Rückkopplungsschleife angeordneten Mitteln zur Durchführung dieser Analyse, die eine Steuervorrichtung (3, 4) enthalten, welche die Ausgangssignale des Fühlers (2) empfängt, um einen Regler (5) für die Luft-Brennstoff-Anreicherung (A/E) zu steuern, dadurch gekennzeichnet, dass die Mittel zur Durchführung dieser Analyse wenigstens einen Fühler umfassen, der nach dem Verfahren gemäss einem der Ansprüche 3 bis 5 hergestellt ist, derart, dass eine Amplituden- und Vorzeichenvariation des Verhältnisses der Relativkonzentrationen der Reaktionskomponenten, die in dem Auspuffgas (G) vor der Analyse vorhanden sind, in vorbestimmten Proportionen hervorgerufen wird und dass die Regulierung des Luft-Brennstoff-Gemisches (A/E) in denselben vorbestimmten Proportionen wie die Änderung des Verhältnisses der Relativkonzentrationen der Reaktionskomponenten eingestellt werden kann.

7. System zur Regulierung des Luft-Brennstoff-Gemisches (A/E) eines Motors (1) mit interner Verbrennung durch elektrochemische Analyse der Auspuffgase (G), gemäss Anspruch 6, dadurch gekennzeichnet, dass die genannten Analysemittel mehrere Fühler (21–22) umfassen, die unterschiedlich eingestellt sind, so dass ebenso viele verschiedene Regulierungspunkte des Luft-Brennstoff-Gemisches (A/E) definiert sind.

8. System zur Regulierung des Verhältnisses der Relativkonzentrationen eines Fluidgemisches, welches in einer vorbestimmten Proportion verschieden ist von dem stöchiometrischen Verhältnis; mit jeweils einer getrennten Leitung ($CO$, $O_2$) für jede Komponente für die Zuleitung zu einem Mischer (M); wobei das Regulierungssystem dadurch gekennzeichnet ist, dass es eine Rückkopplungsschleife, die wenigstens einen Fühler (C) enthält, der gemäss einem der Ansprüche 3 bis 6 hergestellt ist und am Ausgang eines Mischers (M) angeordnet ist, und eine Steuervorrichtung (1, 2) umfasst, welche die Ausgangssignale des Fühlers empfängt, zur Steuerung eines Regulierschiebers (V), der in die Zuleitung derjenigen Komponente ($O_2$) eingefügt ist, für die die elektrochemische Zelle des Fühlers (C) empfindlich ist.

9. Reguliersystem nach Anspruch 8, dadurch gekennzeichnet, dass es mehrere Fühler umfasst, die unterschiedlich eingestellt sind, so dass ebenso viele verschiedene Verhältnisse der Relativkonzentrationen zwischen diesen, die von dem stöchiometrischen Verhältnis verschieden sind, definiert sind.

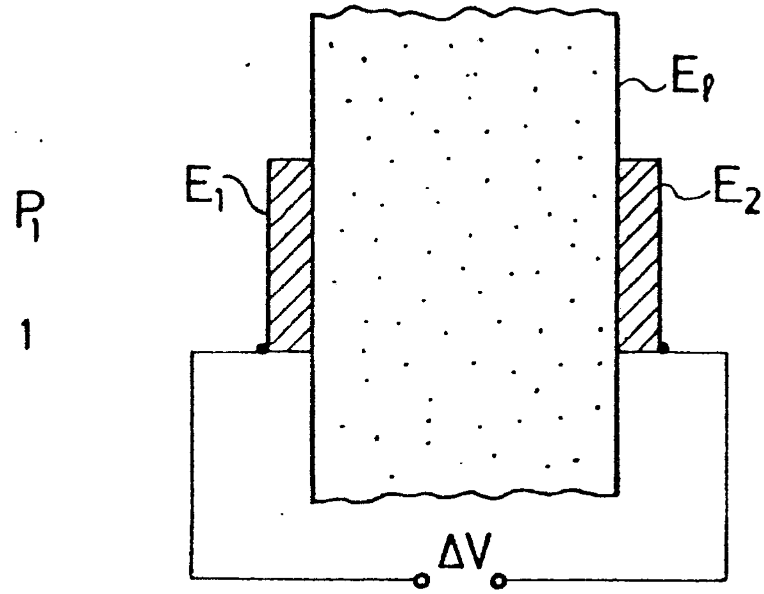


Fig. 1

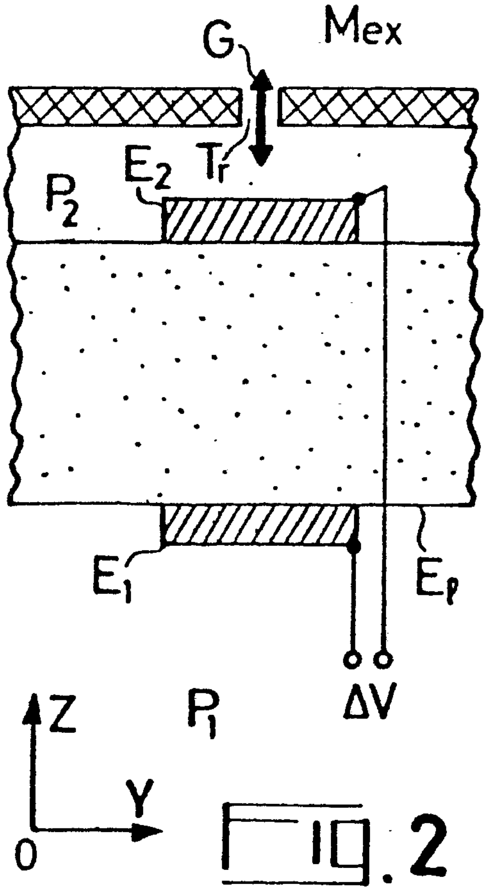


Fig. 2

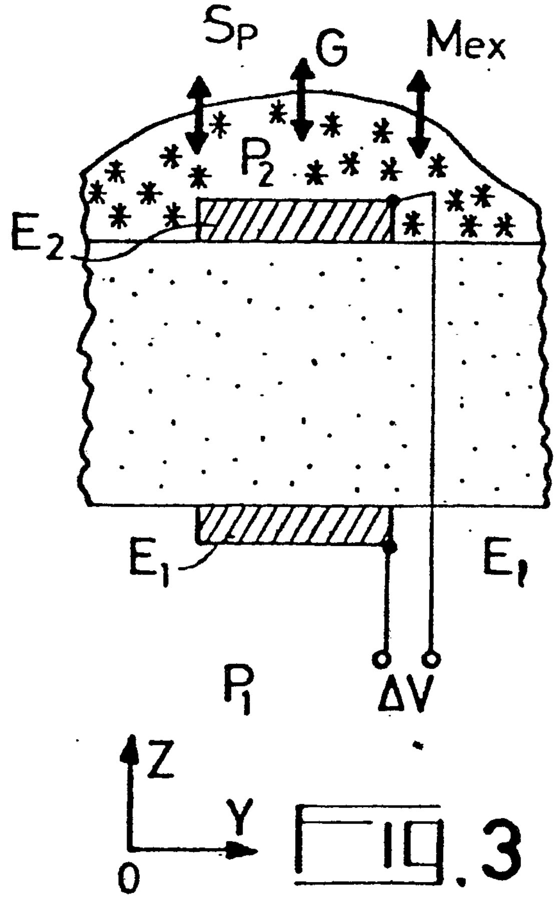


Fig. 3

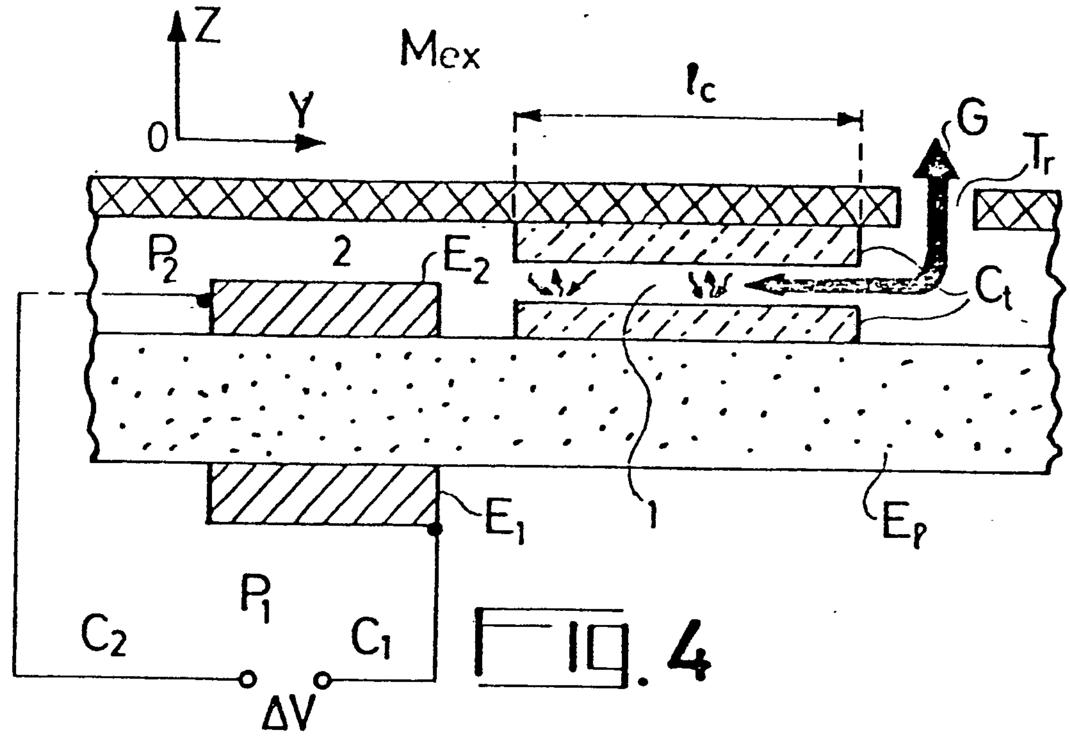
Z
Y
0
Mex
$l_c$
G
Tr
$P_2$
2
$E_2$
$C_t$
1
$E_1$
$E_\ell$
$P_1$
$C_2$
$C_1$
ΔV

Fig. 4

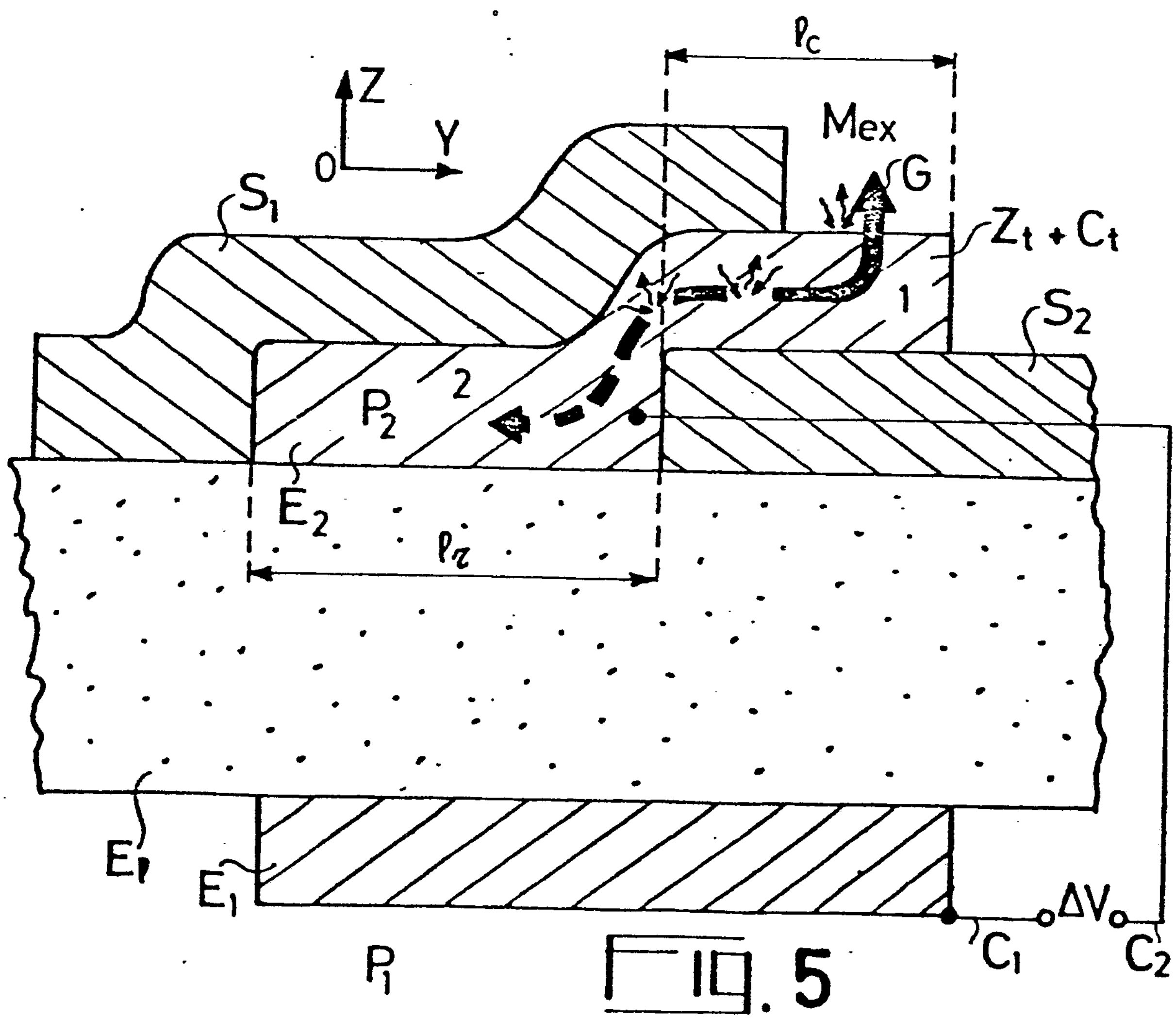
$l_c$
Z
Y
0
Mex
G
$S_1$
$Z_t + C_t$
1
$S_2$
2
$P_2$
$E_2$
$l_z$
$E_\ell$
$E_1$
ΔV
$C_1$
$C_2$
$P_1$

Fig. 5

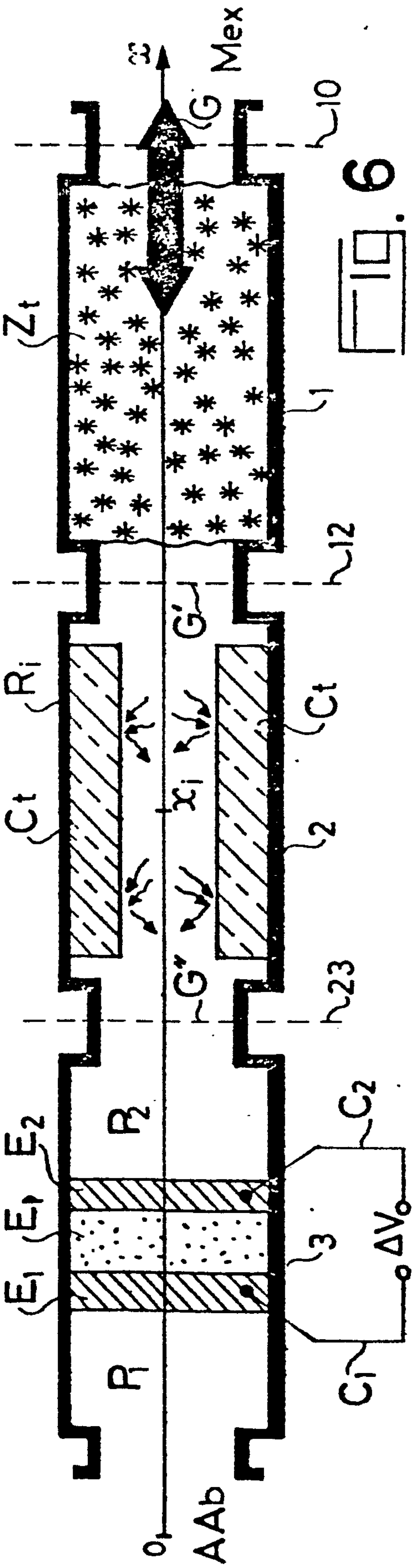


FIG. 6

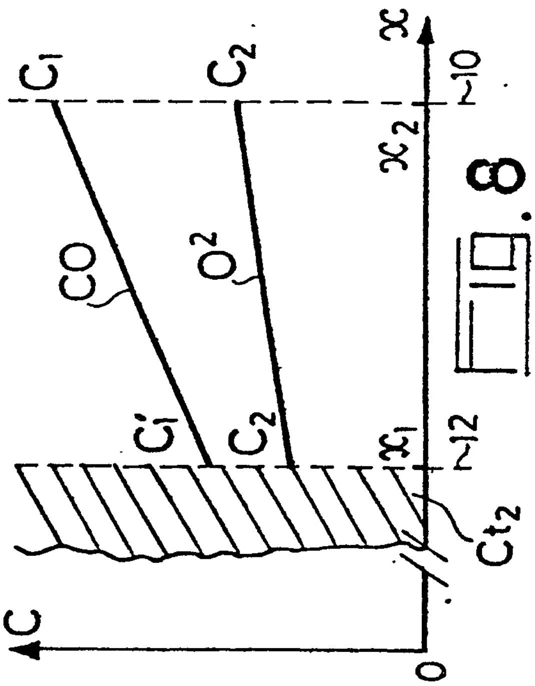


FIG. 8

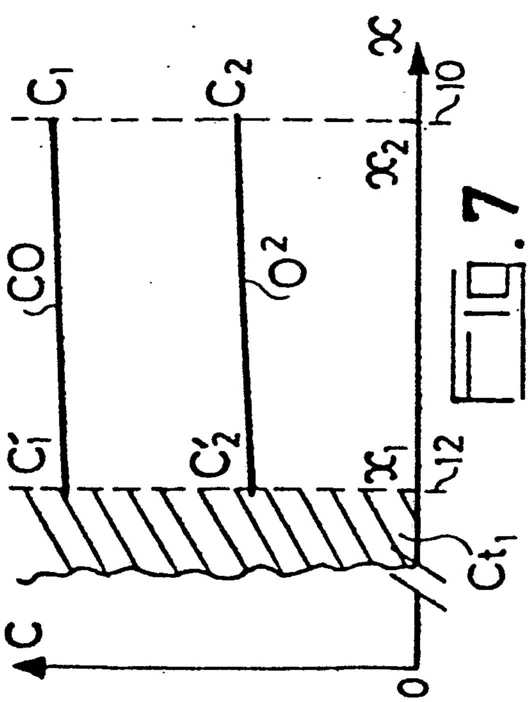


FIG. 7

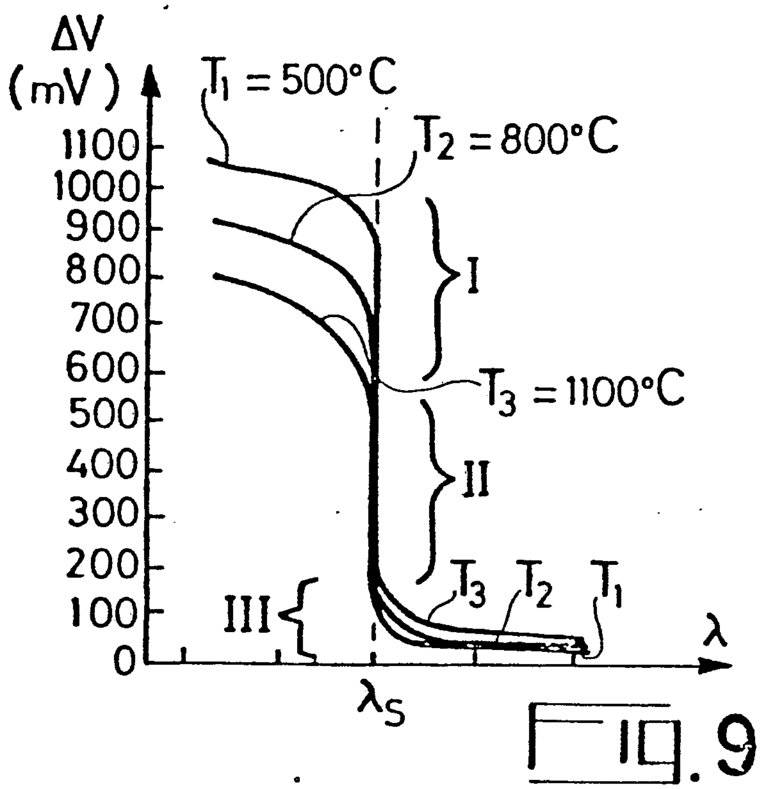
ΔV (mV)
T1 = 500°C
T2 = 800°C
T3 = 1100°C
1100
1000
900
800
700
600
500
400
300
200
100
0
I
II
III
T3
T2
T1
λ
λS

Fig. 9

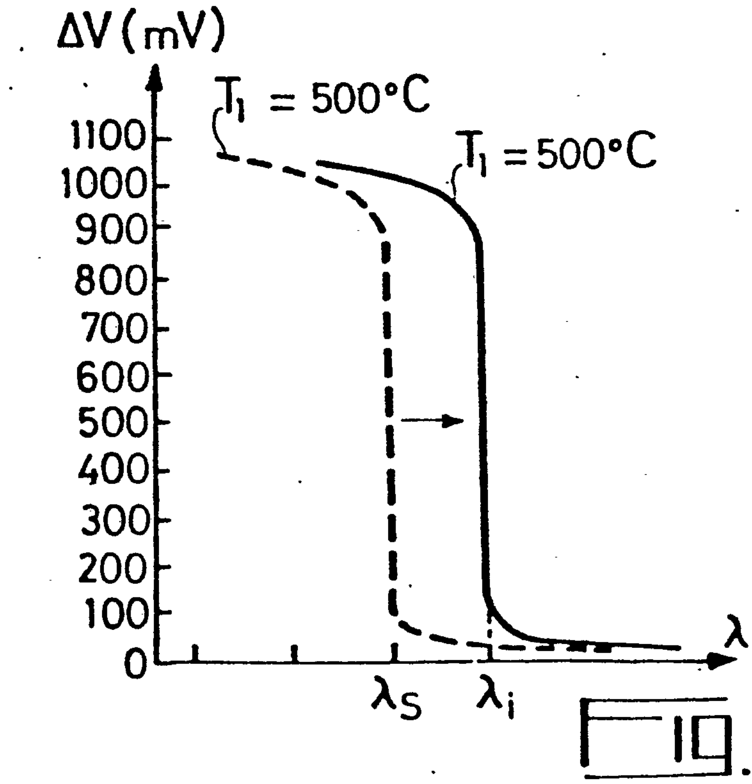
ΔV (mV)
T1 = 500°C
T1 = 500°C
1100
1000
900
800
700
600
500
400
300
200
100
0
λ
λS
λi

Fig. 10

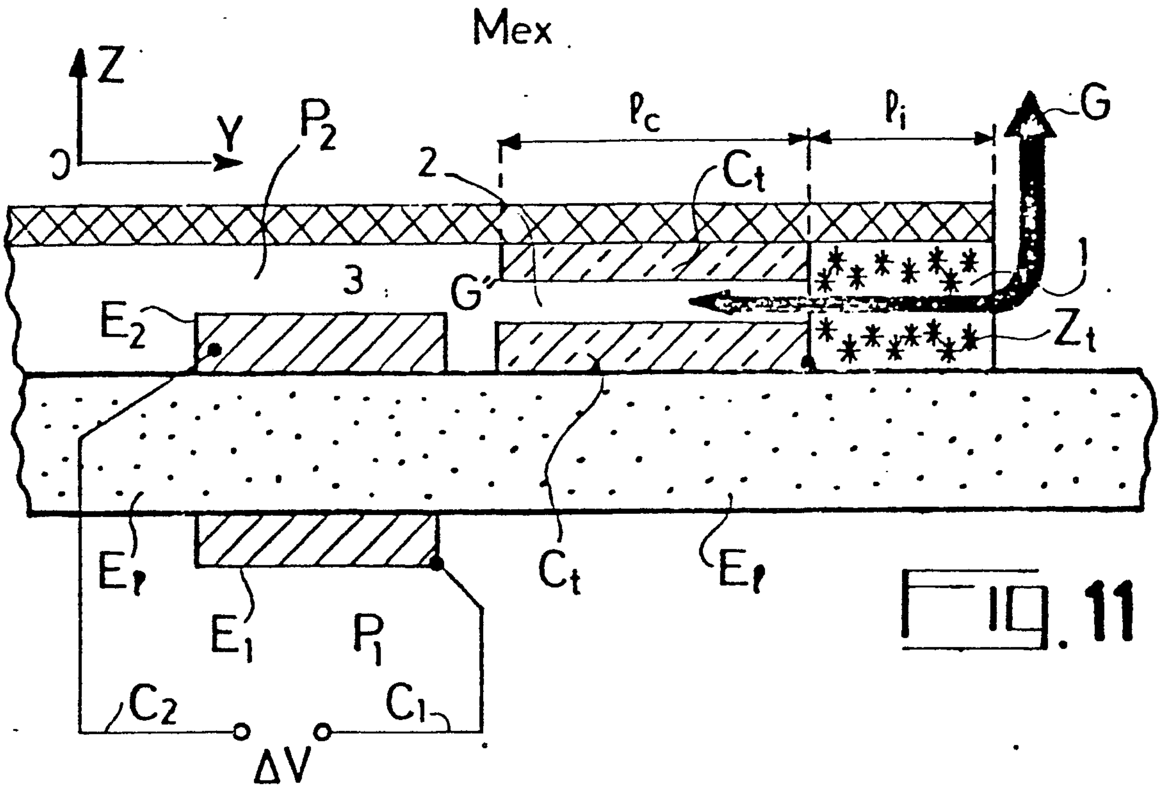
Mex
Z
Y
P2
ℓc
ℓi
G
2
Ct
3
G″
1
E2
Zt
Ct
Eℓ
Eℓ
E1
P1
C2
C1
ΔV

Fig. 11

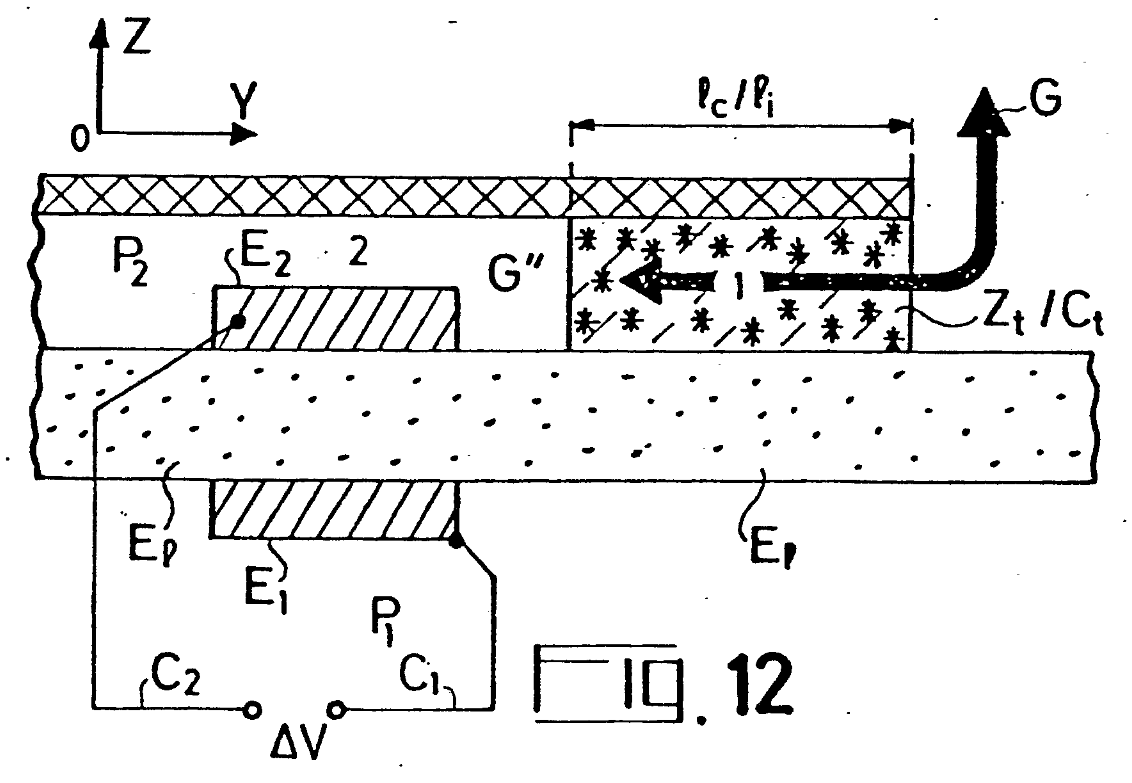
Z
Y
0
ℓc / ℓi
G
P2
E2
2
G″
1
Zt / Ct
Eℓ
Eℓ
E1
P1
C2
C1
ΔV

Fig. 12

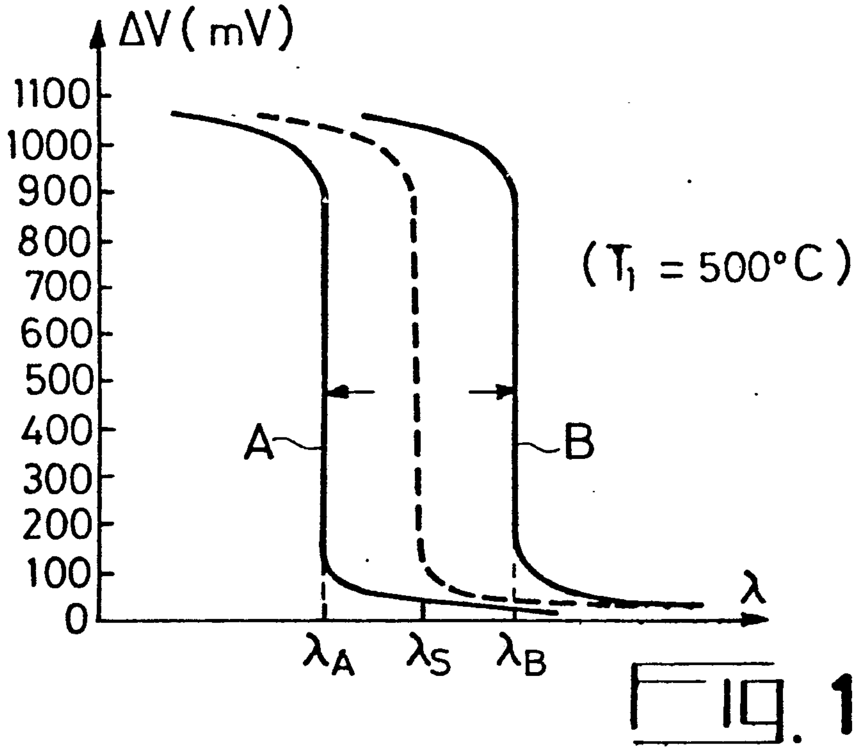
ΔV ( mV)
1100
1000
900
800
700
600
500
400
300
200
100
0
(T1 = 500°C)
A
B
λ
λA
λS
λB

Fig. 13

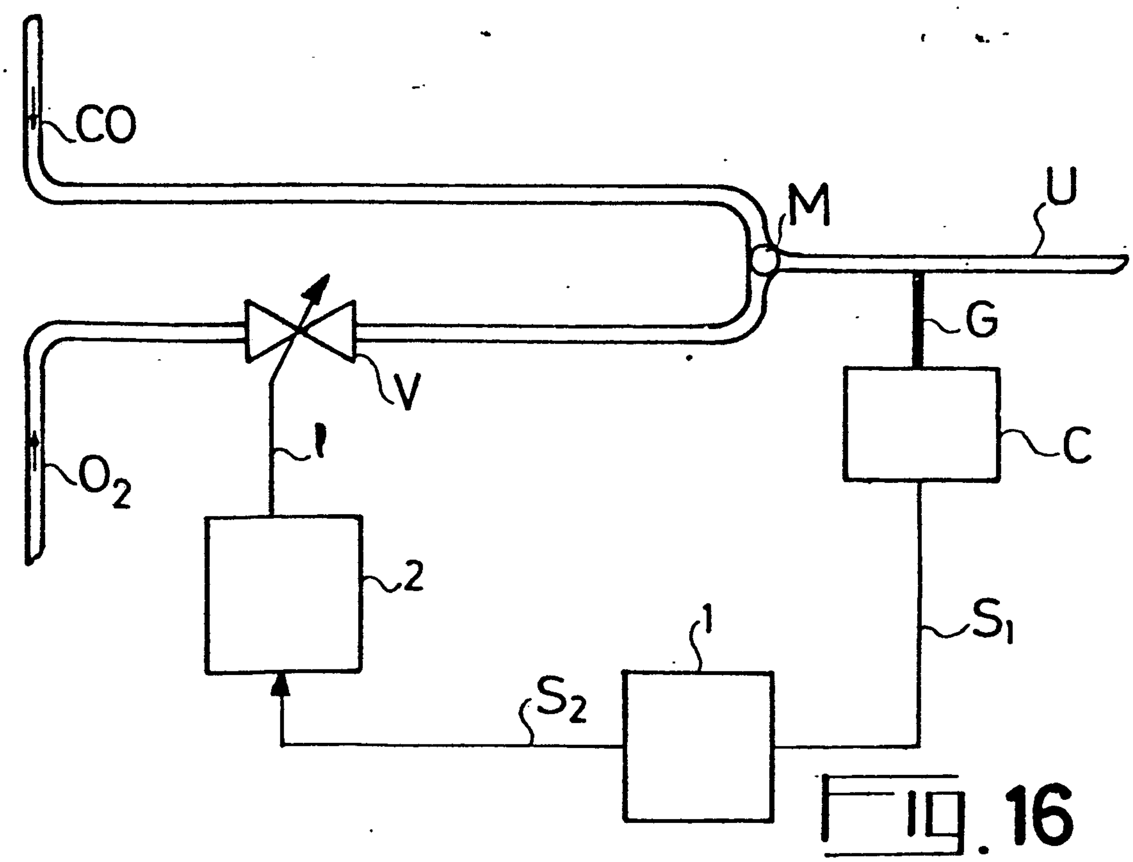
CO
M
U
G
V
C
O2
I
2
1
S1
S2

Fig. 16

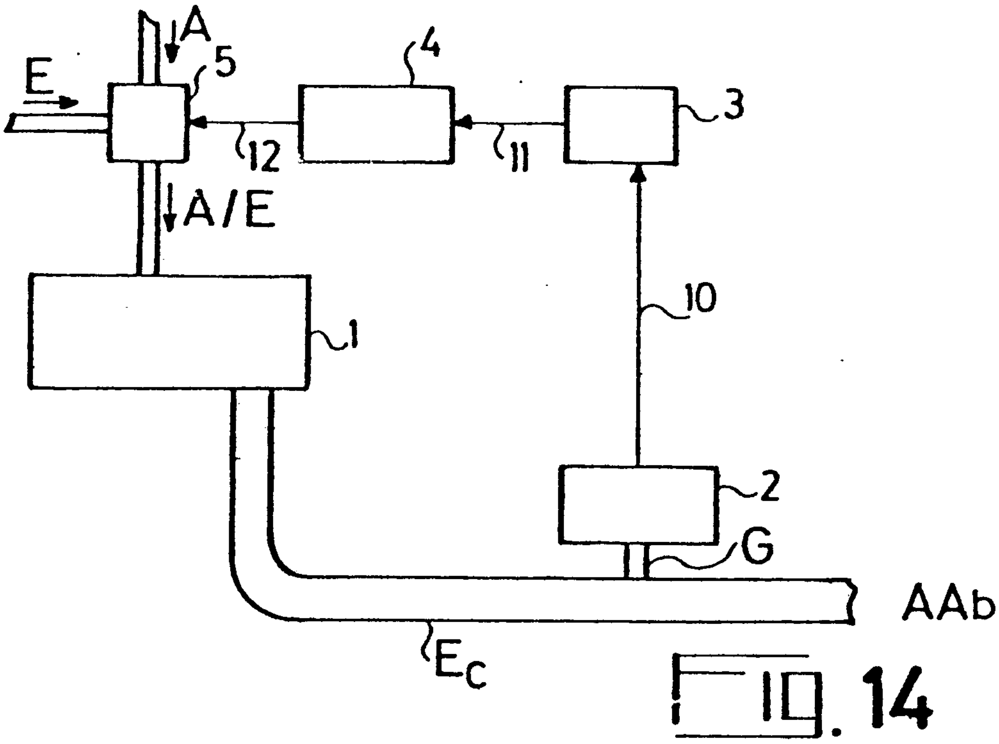
A
E
5
4
3
12
11
A/E
10
1
2
G
AAb
Ec

Fig. 14

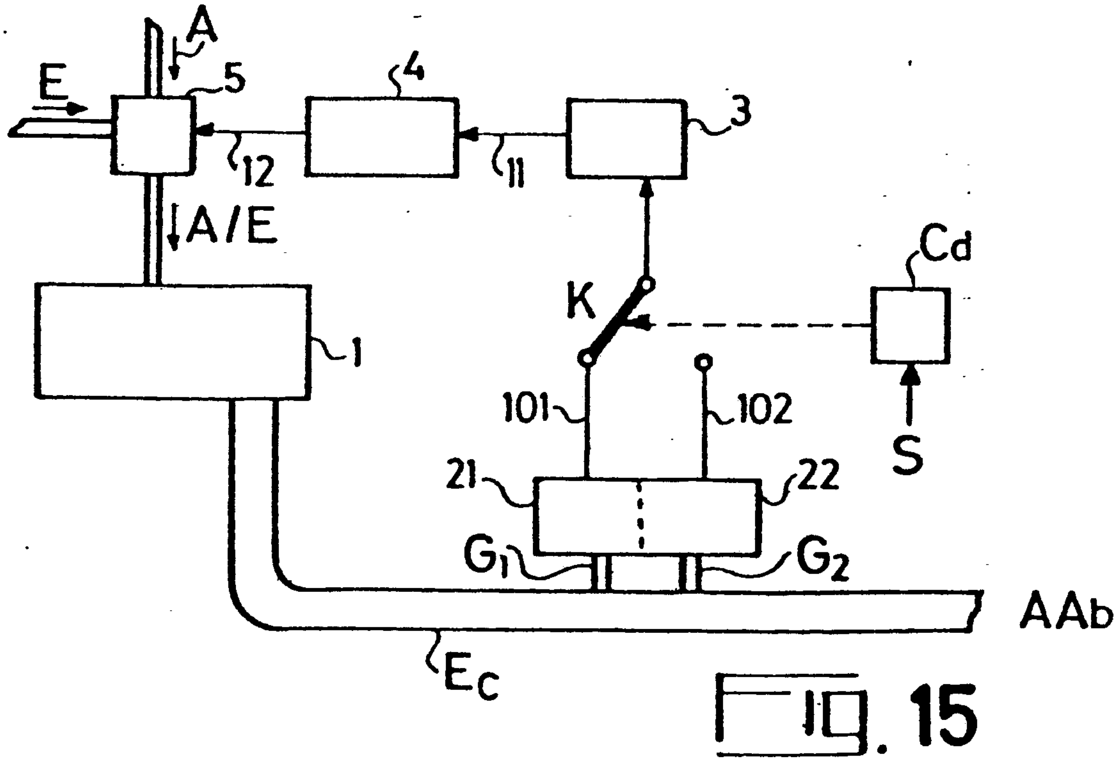
A
E
5
4
3
12
11
A/E
Cd
K
1
101
102
S
21
22
G1
G2
AAb
Ec

Fig. 15